# EUROPEAN PATENT APPLICATION

(11) **EP 4 810 841 A2**
(43) Date of publication of application: **23.09.2026**
(21) Application number: 26165572.4
(22) Date of filing: 17.03.2026
(51) Int. Cl.: F16K 31/06

(54) **VALVES FOR MASS FLOW CONTROLLERS**

(30) Priority: 20.03.2025 US 202563774924 P; 12.03.2026 US 202619565116
(71) Applicant: Illinois Tool Works Inc., Glenview IL 60025 (US)
(72) Inventor: RODRIGUEZ, Michael, Glenview, 60025 (US); ROBERTSON III, Walter Dennis, Glenview, 60025 (US); KUNRATH, Benjamin, Glenview, 60025 (US)
(74) Representative: HGF

(57) **Abstract**

A disclosed example valve for a mass flow controller is provided. The valve includes a coil, a central stem (110) surrounded by the coil, and a housing (106) to contain the coil and the central stem. A plunger having a first end arranged within the central stem and surrounded by the coil, and a second end is configured to mate with an orifice block within a base (102) of a flow body in a first closed position, wherein an airgap is formed between a surface of the second end of the plunger and a base of the central stem.

## Description

### RELATED APPLICATIONS

The present application claims the benefit of U.S. Provisional Patent Application Serial No. 63/774,924, filed March 20, 2025, entitled "VALVES FOR MASS FLOW CONTROLLERS." The entirety of U.S. Provisional Patent Application Serial No. 63/774,924 is expressly incorporated herein by reference.

### FIELD OF THE DISCLOSURE

This disclosure is directed generally to flow control and, more particularly, to a solenoid valve design having a small package, including a wedge or conical shaped plunger to provide more magnetic pull-down force in the lower area of the valve, and lower and upper guide springs that are welded onto the valve stem.

### BACKGROUND

Mass flow controllers receive a flow of one or more gases, measure the amount of flow of the gases, and control the flow through a control valve.

### SUMMARY

Disclosed example valves for mass flow controllers include a plunger arranged within a central stem, having an airgap formed between a surface of the plunger the central stem, substantially as illustrated by and described in connection with at least one of the figures, as set forth more completely in the claims.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1A is a perspective view of an example valve for a mass flow controller, and FIG. 1B is a side view of the example valve, in accordance with aspects of this disclosure.
FIG. 2 is an exploded view of the example valve of FIGS. 1A and 1B, in accordance with aspects of this disclosure.
FIGS. 3A to 3C illustrate cross-sectional views of the example valve and plunger of FIGS. 1A and 1B, in accordance with aspects of this disclosure.
FIG. 4A depicts a cross-sectional view of the BASE shown in FIGS. 1A and 1B, and FIG. 4B is a side view of the BASE, in accordance with aspects of this disclosure.
FIG. 5 illustrates a cross-sectional view of another example valve, in accordance with aspects of this disclosure.

The figures are not necessarily to scale. Wherever appropriate, similar or identical reference numerals are used to refer to similar or identical components.

### DETAILED DESCRIPTION

For the purpose of promoting an understanding of the principles of the claimed technology and presenting its currently understood, best mode of operation, reference will be now made to the embodiments illustrated in the drawings and specific language will be used to describe the same. It will nevertheless be understood that no limitation of the scope of the claimed technology is thereby intended, with such alterations and further modifications in the illustrated device and such further applications of the principles of the claimed technology as illustrated therein being contemplated as would typically occur to one skilled in the art to which the claimed technology relates.

Mass flow controllers are used in applications such as semiconductor manufacturing bioprocessing, thin film, and chemicals processing to deliver precise ratios of gases. In the example of semiconductor manufacturing, gas can be precisely delivered to different regions of a wafer. Such manufacturing applications benefit from faster response times, repeatability of results, and consistency of results, in addition to cost-effectiveness. Conventional mass flow controllers may include a pressure-based mass flow meter or a thermal mass flow meter, as well as mass flow control valves to control delivery of the fluid flow. Precision control of the valve can provide improved delivery of such fluids.

Disclosed example valves for mass flow controllers provide improved stability and accuracy compared with conventional mass flow controllers, as well as improved response times to changing flow rates.

Some example precision gas distribution systems employing the valve for mass flow control further include thermal sensors configured to measure temperatures of the gas flow. For example, the control circuitry may be configured to control the valve to regulate gas flow based on the output of the thermal sensors.

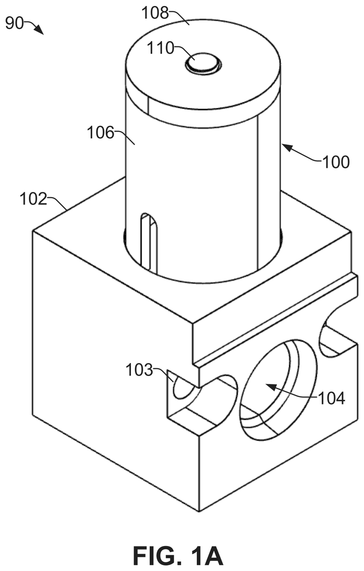

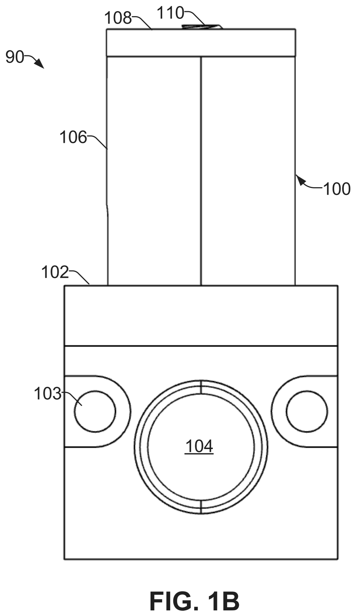

FIG. 1A is a perspective view of an example valve 100 for a mass flow controller. FIG. 1B provides a side view of the example valve 100. As shown, the valve 100 includes a housing 106 to contain the components of the valve. A central stem 110 extends through the valve housing 106, here, a portion visible through a top cover 108.

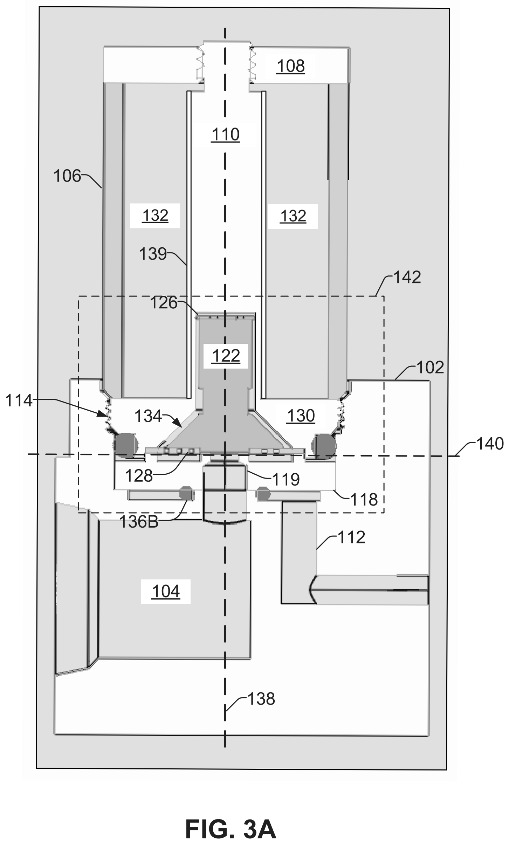

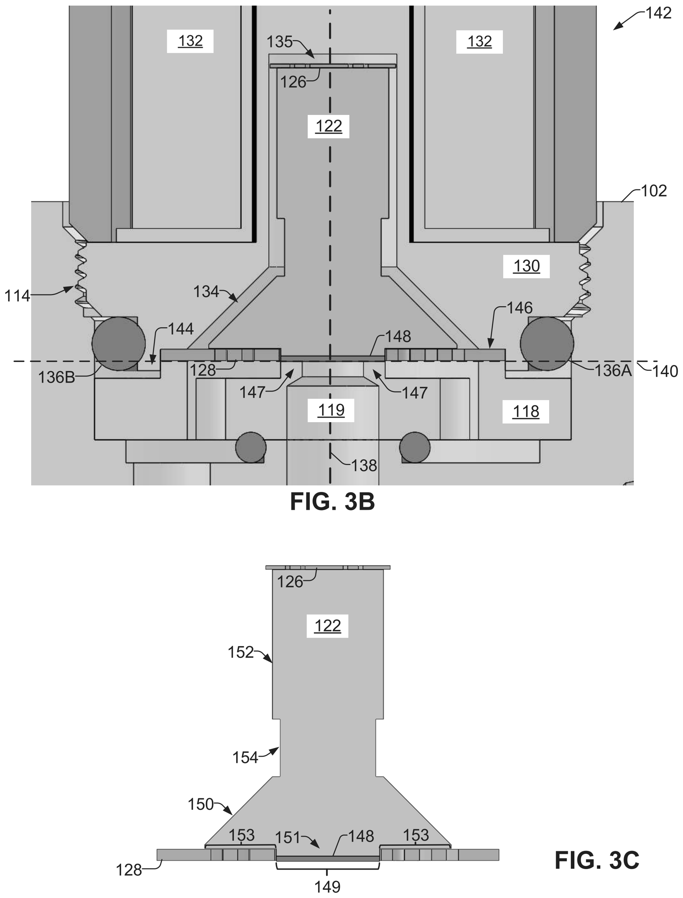

The valve 100 can be incorporated within a mass flow control system 90, which includes a flow body or base 102. The base 102 includes a fluid pathway, designed to allow fluid to be received at an inlet 112, channeled through the pathway, and expelled through an output 104. As shown in greater detail in FIG. 3, components of the valve 100 are arranged along the fluid pathway, and can be controlled to regulate flow of the fluid therethrough. Holes 103 are used to mount the base 102 to another device or system.

In some examples, one or more of the housing 106, the top cover 108, the stem 110, and/or the base 102 are formed of a common material, such as a metal. In other examples, one or more of the structures are formed of another material, such as another metal or metallic alloy, a ceramic, a polymeric material, as a list of non-limiting examples. In some examples, the orifice block and/or the base 102 is formed of a non-magnetic material. The materials selected to form the components should be able to withstand high pressures (e.g., from) and temperatures (e.g., from) during operation.

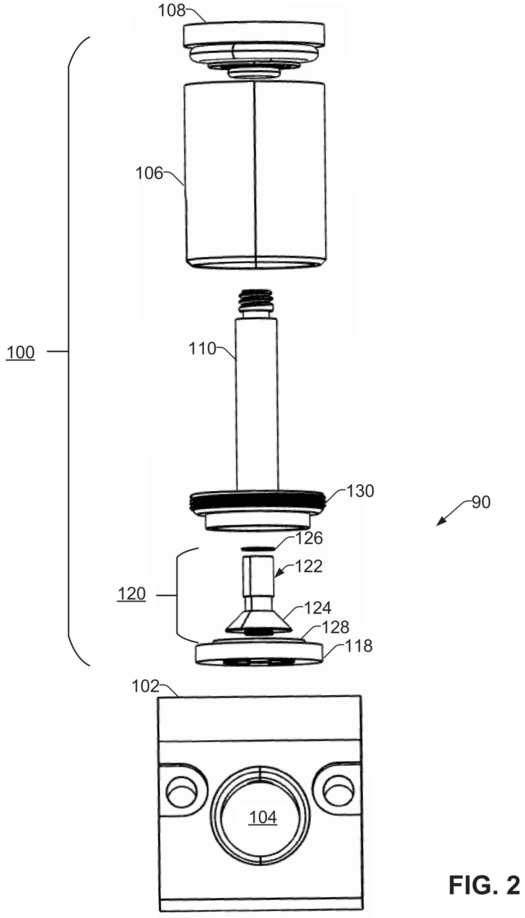

FIG. 2 illustrates an exploded view of the example valve shown in FIGS. 1A and 1B. The housing 106 of the valve 100 is configured to receive and support multiple valve components, including but not limited to a plunger assembly 120 and the stem 110, which is threadably received by the top cover 108. A coil is also provided within the housing 106, surrounding a central stem (as shown in FIG. 3).

The plunger assembly 120 includes a plunger 122, with a narrow, first end to receive a first (upper) guide spring or biasing element 126 and dimensioned to fit within the stem 110. A second end of the plunger 122 is defined by a frustroconical shape, which flares from a first diameter of the plunger main body to a greater, second diameter. The second end is designed to be fitted with a second (lower) guide spring or biasing element 128.

FIG. 3A illustrates a cross-sectional view of an assembled flow system 90. As shown, when the valve 100 is fully assembled, the first end of the plunger assembly 120 is inserted into the stem 110, and the second end of the plunger assembly 120 rests upon an orifice block or fluid channel 118. The orifice block 118 is received by the base 102, to support and align the plunger assembly 120 with the fluid pathway. In some examples, the orifice block 118 is integrated with the base 102.

In the example of FIG. 3, the stem 110 has a base portion 130 with external threading to mate with internal threads within a recessed portion 114 of the base 102. The connection between the valve assembly 100 and the base 102 may be disconnectable or may be a permanent connection, such as via a threaded connection, quick-connect connection, welded or soldered connection, and/or any other appropriate type(s) of connection(s). The valve 100 can be torqued to seal the valve 100 within the base 102 via seal 136A (e.g., a gasket, an O-ring, a bushing, a washer, etc.). The position of the valve 100 relative to the base 102 also secures the orifice block 118 within the base 102, forming a seal via seal 136B.

When assembled, each of the plunger 122, coil 132, the housing 106, and an orifice or inlet 119 of the orifice block 118 are aligned, oriented about a common axis 138. For example, the orifice block 118 forms a portion of the fluid pathway - from the inlet 112, through the orifice block 118, and out through outlet 104. For example, the inlet 112 and/or the outlets 104 may be coupled to fluid sources/destinations by one or more conduits (e.g., via hoses, pipes, ducts, and/or any other rigid, semi-rigid, and/or flexible lines).

The plunger 122 is arranged within the central stem 110 and surrounded by the coil 132, thus moving the plunger as a solenoid, although other suitable mechanisms are considered within the scope of this disclosure. In operation, current to the coil 132 can be controlled to change a position of the plunger 122 relative to the orifice block 118. In a first, closed position, the plunger 122 can be fully seated against the orifice block 118, thereby preventing fluid flow through the fluid pathway (as shown in the examples shown in FIGS. 3A to 3C). Control of the coil 132 can cause the plunger 132 to change position and move into the stem 110, thereby allowing fluid to flow through the orifice block 118. Thus, the position of the plunger 122 controls an amount of fluid through the inlet 112, and through the outlet 104.

In some examples, the plunger 122 is formed as a single piece, with first and second guide springs attached to the first and second ends, respectively. The guide springs can be attached by various means, including welding, brazing, or adhesives, as a list of non-limiting examples. In a first, closed position shown in FIGS. 3A and 3B, the second end of the plunger is forced against the orifice land area 147 by a biasing force from the second guide spring 128. In some examples, the spring 128 is fixed, mounted, welding, or otherwise fastened to a surface 153 of the plunger. The spring 128 is further secured between the stem 130 and the orifice block 118 (by forces between ridge 146 and the orifice block 118). The biasing force is created at an interface between the plunger surface 153 and the spring 128. In some examples, a sealing surface 148 is directly formed on a central extension 151 of the plunger 122.

For instance, the sealing surface 148 can be directly bonded or otherwise attached to the plunger 122. This can be achieved via an adhesive, weld, chemical deposition, and/or heat treatment. Advantageously, the sealing surface (e.g., an elastomeric and/or polymeric material) can be bonded to the plunger without the need for a mechanical fastener, allowing for a smaller component design, and avoiding the need for additional parts that may complicate operation of the valve.

One or both of the sealing surface 148 or the central extension 151 extends into the orifice land area 147, fitting within an opening 149 in the spring 128, causing a seal between the sealing surface 148 and the orifice land area 147 to prevent fluid flow through orifice 119. Advantageously, the spring 128 causes a force on the plunger 122 toward the orifice land area 147, allowing the sealing surface 148 to contact the orifice land area 147 along the plane 140, closing orifice 119.

In the assembled form, an extension 144 in a lower region of the base portion 130 provides alignment of the plunger 122 and flow metering area to the stem 110 around a common axis 138 and to a common plane 140. For example, the extension 144 can be an annular lip formed on a surface of the base portion 130 of the stem. When assembled, the annular lip forces downward and around the orifice block 118, thereby fixing the alignment of the base portion 130 and the orifice block 118. In some examples, a ridge 146 overlaps with a portion of the spring 28 to fix the axial and planar position of the spring 28 relative to the base portion 130 and orifice block 118. The planar and axial alignment of such components (e.g., the stem 110, the plunger 122, the spring 128, and the flow metering orifice through orifice land area 147) provides a number of performance advantages apparent to those skilled in the art. In the assembled position shown in FIGS. 3A and 3B, there is also created a second airgap 134 between the central stem 110 and the plunger 122, which serves to generate an additional magnetic pull force on the plunger during activation of the coils 132. As the plunger 122 moves into the central stem 110, the increasing magnetic pull force is generated at both an upper airgap 135 and the second airgap 134. In the closed position shown in FIG. 3A, the second end of the plunger 122 is forced against the second guide spring 128, exposing the air gap 134 about the conical base of second end 150 of the plunger 122 (as shown in FIG. 3C).

In some examples, the space in which the airgap 134 resides changes based on the position of the plunger 122 relative to the stem 110. For example, in the closed configuration shown in FIG. 3B, the airgap 134 is within a space between the sloped portion of the second end 150 of the plunger 122 and the base 130 of the stem 110. When the coil 132 is activated, a magnetic force is generated, causing movement of the plunger 122 into the stem 110. Due to the conical shape of the second end 150, the magnetic force creates additional lift on the plunger 122 through the airgap 134, forcing the plunger upwards. In some examples, an airgap is maintained about the a major portion of the external surface of the plunger 122, such as above the first spring 126 and the sides of the body 152. In some examples, a channel 154 is formed about the body 152, which creates an radial airgap around the body 152, serving to minimize the magnetic short in that location, thereby directing the magnetic field through the airgap 134 and onto the plunger 122.

In some examples, the first and second springs 126 and 128 are welded onto the plunger 122, the first and second springs providing a preloaded force biasing the plunger 122 toward from the orifice block 118. In some examples, the first, or upper, guide spring 126 applies a first preloaded force, and the second, or lower, guide spring 128 applies a second preloaded force that is greater than the first preloaded force.

In some additional or alternative examples, the valve 100 may include one or more magnets to encourage movement of the plunger 122. For example, one or more magnets can be arranged on the plunger 122 itself (e.g., along the body of the plunger 122, within the stem 110), and/or within the housing 106 (e.g., along the stem 110).

In some additional or alternative examples, the system 90 further includes a bearing sleeve 139 within an external diameter similar to an internal diameter of the stem 110. The bearing sleeve 139 fits within the stem 110, surrounding the plunger 122, thereby facilitating movement of the plunger 122 within the stem 110. In examples, the bearing sleeve 139 is formed of a polymer or similar material.

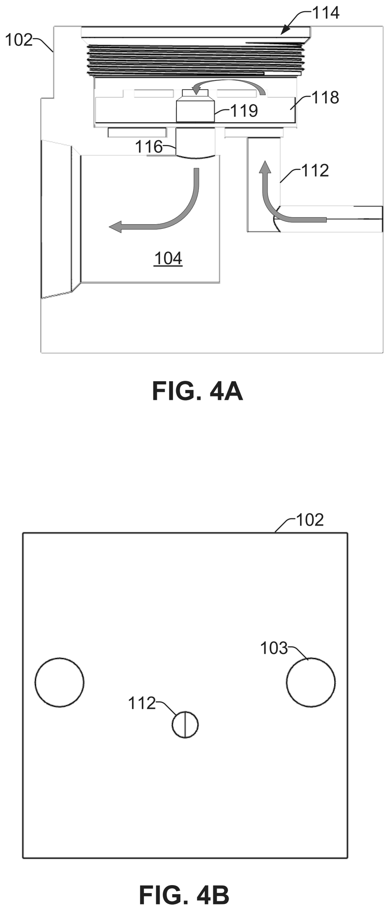

FIG. 4A depicts a cross-sectional view of the base 102 with arrows indicating the fluid pathway through the inlet 112, from the inlet 112 to the orifice 119 and channel 116 of the orifice block 118, and out through the outlet 104. FIG. 4B shows the position of the outlet 104 on a surface of the base 102, opposite the surface with the inlet 112.

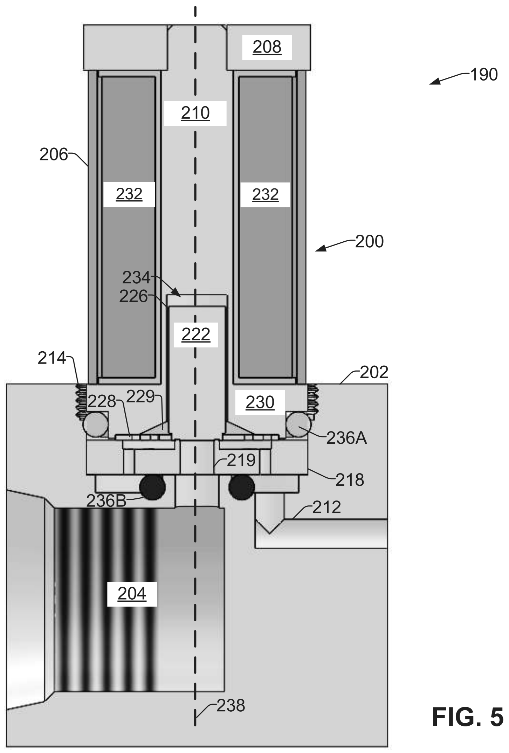

FIG. 5 illustrates a cross-sectional view of another example valve 200 incorporated with an assembled flow system 190. As shown, a first end of a plunger 222 is inserted into a stem 210, and a second end of the plunger 222 rests upon an orifice block 218. The orifice block 218 is received by a base 202, to support and align the plunger 222 with a fluid pathway through the base 202. The stem 210 has a base portion 230 with external threading to mate with internal threads within a recessed portion 214 of the base 202. The valve 200 can be torqued to seal the valve 200 within the base 202 via seal 236A (e.g., a gasket, an O-ring, a bushing, a washer, etc.). The position of the valve 200 relative to the base 202 also secures the orifice block 218 within the base 202, forming a seal via seal 236B.

When assembled, each of the plunger 222, coil 232, the housing 206, and an inlet 219 of the orifice block 218 are aligned, oriented about a common axis 238. For example, the orifice block 218 forms a portion of the fluid pathway - from the inlet 212, through the orifice block 218, and out through outlet 204.

The plunger 222 is arranged within the central stem 210 and surrounded by the coil 232. In operation, current to the coil 232 can be controlled to change a position of the plunger 222 relative to the orifice block 218. In a first, closed position, the plunger 222 can be fully seated against the orifice block 218, thereby preventing fluid flow through the fluid pathway (as shown in the example of FIG. 5). An airgap 229 can surround a lower portion of the plunger 222. Control/activation of the coil 232 can cause the plunger 232 to change position and move into the stem 210, thereby allowing fluid to flow through the orifice block 218. Thus, the position of the plunger 222 controls an amount of fluid through the inlet 212, and through the outlet 204.

In some examples, the plunger 222 is formed as a single piece, with first and second guide springs attached to the first and second ends, respectively. The guide springs can be attached by various means, including welding, brazing, or adhesives, as a list of non-limiting examples. In the closed position shown in FIG. 5, the second end of the plunger 222 forces the second guide spring 228 against the orifice block 218, providing an air gap 234 about the plunger 222.

In some embodiments, the example valve 100, such as the activation of the coils 132 and thereby the plunger 122, can be controlled by control circuitry, such as through automatic controls or via a user interface. The example control circuitry may be an integrated processing system, a programmable logic controller, a general-purpose computer, a laptop computer, a tablet computer, and/or any other type of processing system configured to communicate with the valve 100. For example, the control circuitry can include a processor, memory, and a storage device. The example processor may be any general purpose central processing unit (CPU) from any manufacturer. In some other examples, the processor may include one or more specialized processing units, such as RISC processors with an ARM core, graphic processing units, digital signal processors, and/or system-on-chips (SoC). The processor executes machine readable instructions that may be stored locally at the processor (e.g., in an included cache or SoC), in the memory (e.g., a random access memory or other volatile memory, a read only memory or other non-volatile memory such as FLASH memory, and/or in the storage device. The example storage device may be a hard drive, a solid state storage drive, a hybrid drive, a RAID array, and/or any other mass data storage device.

As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations.

While the present method and/or system has been described with reference to certain implementations, it will be understood by those skilled in the art that various changes may be made, and equivalents may be substituted without departing from the scope of the present method and/or system. For example, block and/or components of disclosed examples may be combined, divided, re-arranged, and/or otherwise modified. In addition, many modifications may be made to adapt a particular situation or material to the teachings of the present disclosure without departing from its scope. Therefore, the present method and/or system are not limited to the particular implementations disclosed. Instead, the present method and/or system will include all implementations falling within the scope of the appended claims, both literally and under the doctrine of equivalents. Certain embodiments of the invention are described in the following clauses:
Clause 1. A valve for a mass flow controller, comprising:
   a coil;
   a central stem surrounded by the coil;
   a housing to contain the coil and the central stem; and
   a plunger having a first end arranged within the central stem and surrounded by the coil, and a second conical end configured to mate with an orifice land area an orifice block within a base of a flow body in a first closed position,
   wherein an airgap is formed between a surface of the second conical end of the plunger and a base of the central stem.
Clause 2. The valve of clause 1, wherein activation or deactivation of the coil causes the plunger to move and change position relative to the orifice block to control flow of the fluid through the flow body.
Clause 3. The valve of clause 1, wherein the second end of the plunger is arranged at an orifice block inlet, wherein the valve seals the orifice block inlet in the closed position.
Clause 4. The valve of clause 1, wherein changing position of the plunger changes a flow of fluid though the orifice block inlet, wherein the orifice block inlet is part of a fluid pathway between a flow body inlet and an fluid body outlet.
Clause 5. The valve of clause 1, wherein the orifice block inlet is aligned with the plunger.
Clause 6. The valve of clause 1, further comprising one or more biasing elements within the orifice block to stabilize a position of the plunger.
Clause 7. The valve of clause 6, wherein the one or more biasing elements are welded onto a portion of the plunger, the one or more biasing elements providing a preloaded force biasing the plunger toward from the orifice block.
Clause 8. The valve of clause 7, wherein the one or more biasing elements include upper and lower guide springs.
Clause 9. The valve of clause 8, wherein the upper guide spring applies a first preloaded force, and the lower spring providing a second preloaded force greater than the first preloaded force.
Clause 10. The valve of clause 1, further comprising one or more magnets arranged on the plunger.
Clause 11. The valve of clause 1, further comprising one or more magnets arranged within the housing.
Clause 12. The valve of clause 1, further comprising a bearing sleeve within an internal diameter of the stem and surrounding the plunger, the bearing sleeve configured to facilitate movement of the plunger within the stem.
Clause 13. The valve of clause 12, wherein the bearing sleeve is formed of a polymer.
Clause 14. The valve of clause 1, wherein the orifice block is formed of a non-magnetic material.
Clause 15. The valve of clause 1, wherein each of the plunger, coil, housing, and stem are oriented about a common axis.
Clause 16. A valve for a mass flow controller, comprising:
   a coil;
   a central stem surrounded by the coil;
   a housing to contain the coil and the central stem; and
   a plunger having a first end arranged within the central stem and surrounded by the coil, and a second end with a elastomeric extension,
   wherein the elastomeric extension is configured to mate with an orifice land area of an orifice block to in a first closed position.
Clause 17. The valve of clause 16, wherein the elastomeric extension is directly bonded to the second end of the plunger.
Clause 18. The valve of clause 17, wherein the elastomeric extension creates a seal with the orifice land area to prevent fluid flow through the orifice block.
Clause 19. The valve of clause 18, wherein the central stem, the plunger, and the elastomeric extension are in axial alignment.
Clause 20. The valve of clause 19, further comprising a spring arranged between the plunger and the orifice block, wherein the elastomeric extension extends into an opening in the spring to mate with the orifice land area.
Clause 21. The valve of clause 20, wherein a first portion of the spring is bonded to an annular surface of the plunger, and a second portion of the spring is secured between a base portion of the central stem and the orifice block.

## Claims

1. A valve for a mass flow controller, comprising:
a coil;
a central stem surrounded by the coil;
a housing to contain the coil and the central stem; and
a plunger having a first end arranged within the central stem and surrounded by the coil, and a second conical end configured to mate with an orifice land area an orifice block within a base of a flow body in a first closed position,
wherein an airgap is formed between a surface of the second conical end of the plunger and a base of the central stem.

2. The valve of claim 1, wherein activation or deactivation of the coil causes the plunger to move and change position relative to the orifice block to control flow of the fluid through the flow body.

3. The valve of claim 1 or claim 2, wherein the second end of the plunger is arranged at an orifice block inlet, wherein the valve seals the orifice block inlet in the closed position.

4. The valve of any one of claims 1 to 3, wherein changing position of the plunger changes a flow of fluid though the orifice block inlet, wherein the orifice block inlet is part of a fluid pathway between a flow body inlet and an fluid body outlet, and/or
wherein the orifice block inlet is aligned with the plunger.

5. The valve of any one of claims 1 to 4, further comprising one or more biasing elements within the orifice block to stabilize a position of the plunger.

6. The valve of claim 5, wherein the one or more biasing elements are welded onto a portion of the plunger, the one or more biasing elements providing a preloaded force biasing the plunger toward from the orifice block.

7. The valve of claim 6, wherein the one or more biasing elements include upper and lower guide springs, and optionally
wherein the upper guide spring applies a first preloaded force, and the lower spring providing a second preloaded force greater than the first preloaded force.

8. The valve of any one of claims 1 to 7, further comprising one or more magnets arranged on the plunger, and/or
further comprising one or more magnets arranged within the housing.

9. The valve of any one of claims 1 to 8, further comprising a bearing sleeve within an internal diameter of the stem and surrounding the plunger, the bearing sleeve configured to facilitate movement of the plunger within the stem, and optionally
wherein the bearing sleeve is formed of a polymer.

10. The valve of any one of claims 1 to 9, wherein the orifice block is formed of a non-magnetic material, and/or
wherein each of the plunger, coil, housing, and stem are oriented about a common axis.

11. A valve for a mass flow controller, comprising:
a coil;
a central stem surrounded by the coil;
a housing to contain the coil and the central stem; and
a plunger having a first end arranged within the central stem and surrounded by the coil, and a second end with a elastomeric extension,
wherein the elastomeric extension is configured to mate with an orifice land area of an orifice block to in a first closed position.

12. The valve of claim 11, wherein the elastomeric extension is directly bonded to the second end of the plunger.

13. The valve of claim 11 or claim 12, wherein the elastomeric extension creates a seal with the orifice land area to prevent fluid flow through the orifice block.

14. The valve of any one of claims 11 to 13, wherein the central stem, the plunger, and the elastomeric extension are in axial alignment.

15. The valve of any one of claims 11 to 14, further comprising a spring arranged between the plunger and the orifice block, wherein the elastomeric extension extends into an opening in the spring to mate with the orifice land area, and optionally
wherein a first portion of the spring is bonded to an annular surface of the plunger, and a second portion of the spring is secured between a base portion of the central stem and the orifice block.
